# EUROPEAN PATENT SPECIFICATION

(11) **EP 3 972 454 B1**
(45) Date of publication and mention of the grant of the patent: **19.07.2023**
(21) Application number: 20727941.5
(22) Date of filing: 13.05.2020
(51) Int. Cl.: B60N 2/18, B60N 2/02, B60N 2/22

(54) **VEHICLE SEAT**
FAHRZEUGSITZ
SIÈGE DE VÉHICULE

(30) Priority: 21.05.2019 US 201962850566 P
(43) Date of publication of application: 30.03.2022
(73) Proprietor: Adient US LLC, Plymouth, MI 48170 (US)
(72) Inventor: BURTON, Brent D., Windsor, Ontario N8P 1R9 (CA); MICHALAK, Eric Bernard, Canton, Michigan 48187 (US); CARUSS, Nathan, Ann Arbor, MI 48103 (US); SAVESKI, Alexander, South Lyon, MI 48178 (US); KAPUSKY, Michael John, South Lyon, MI 48178 (US)
(74) Representative: Liedtke & Partner Patentanwälte
(86) International application number: PCT/EP2020/063307
(87) International publication number: WO 2020/234080

(56) References cited:
- EP-A1- 3 446 976
- EP-A2- 1 580 065
- WO-A1-2015/097630
- GB-A- 2 563 051
- US-A- 4 687 250

## Description

### BACKGROUND OF THE DISCLOSURE

The present disclosure relates generally to a vehicle seat for a vehicle.

There are a wide variety of vehicle seats, such as transport vehicle or aircraft passenger seats known from the prior art. For example, a vehicle seat comprises at least a seat pan and a backrest, wherein the backrest is pivotable coupled to the seat pan. The backrest can be coupled to the seat pan via a powered recliner mechanism. Further, the vehicle seat can comprise a track assembly to adjust the vehicle seat in a longitudinal direction. Such a seat is known from WO 2015/097630A1 for example.

### SUMMARY OF THE DISCLOSURE

It is an object of the present disclosure to provide an improved vehicle seat which is easily adjustable between at least an initial upright position, such as an ingress/egress and sitting position, and at least a fully inclined position, such as an inclined comfort position. In particular, it is an object of the present disclosure to provide a complete vehicle seat comprising a deep incline and/or recline system to maximize reclining in a small occupant area whereas at the same time a comfort throughout an entire range of a vehicle seat motion is retained.

According to the disclosure, the object is solved by the features claimed in claim 1.

According to the disclosure, the vehicle seat comprises at least a seat support structure which is adjustable between an initial upright position and at least a fully inclined position, a track assembly configured to adjust the seat support structure in a longitudinal direction, and a slide assembly configured to adjust the seat support structure in a substantially vertical direction. The seat support structure comprises at least one of a seat pan which is mounted to the track assembly, and a backrest which is relatively pivotable mounted the seat pan at a backrest pivot axis and which is coupled to the slide assembly. During a longitudinal adjustment of the seat support structure between a first horizontal position and a second horizontal position, at least the backrest is moved in the vertical direction between a first vertical position and a second vertical position. In other words: At least the movement, in particular a vertical adjustment, of the backrest is depending on the longitudinal adjustment of the seat support structure.

For example, the track assembly and the slide assembly are configured as an adjustment mechanism of the vehicle seat. For instance, the first horizontal position of the seat support structure refers to the rearmost position the seat support structure can be driven to with respect to the track assembly. The second horizontal position of the seat support structure refers to the most forward position the seat support structure can be driven to with respect to the track assembly. The first vertical position of the backrest refers to a fully upright position the backrest can be driven to. The second vertical position of the backrest refers to a fully inclined position the backrest can be driven to.

Particularly, when the seat support structure is in the first horizontal position and the backrest is in the first vertical position, the whole seat is in its initial upright position. When the seat support structure is in the second horizontal position and the backrest is in the second vertical position, the whole seat is in its fully inclined position. In particular, an adjustment mechanism is created with the seat pan and the backrest acting as one unit. The seat support structure can also take any sub-positions between the initial upright position and the fully inclined position.

The seat support structure is configured as a continuous adjustable system, wherein during a deep recline and/or incline motion of the seat support structure from the initial upright position (also known as design position) to the fully reclined and/or inclined position (deep recline and/or incline position) no further micro adjusting is needed to re-align comfort features. For instance, the seat is used in a vehicle, a passenger transport vehicle and in an aircraft. Even with less space, e.g. in a passenger cabin, it is desired to provide maximum comfort to the occupant with a simple and compact seat adjustment system. For example, the disclosure provides a seat system with the backrest and the seat pan acting as one unit. The disclosure refers to one single and substantially simple operation via a substantially compact adjustment mechanism, wherein operating the track assembly leads to a deep recline and/or incline motion of the seat pan and the backrest at the same time. Due to the deep recline and/or incline motion of the backrest and the seat pan a foot space in front of the seat is maintained. Deep recline motion means that the seat is moved into a position in such manner that at least a lumbar region is lowered as much as possible with respect to a comfort feeling. Deep incline motion means that the seat pan follows the adjustment of the backrest to at least a more forward position.

For example, the vehicle seat comprises at least one of a lumbar support, an armrest structure and a headrest which can travel together in unison during the adjustment of the seat support structure between the initial upright position and the fully incline position.

According to an embodiment, when the track assembly adjusts the seat support structure in the longitudinal direction from the first horizontal position to the second horizontal position, at least the backrest is pulled in a downward direction along the slide assembly. For example, the backrest is inclined with respect to the seat pan while moving from the first vertical position to the second vertical position. The slide assembly may be mounted to a bulkhead, a rear wall of a seat unit or a cabin wall of the passenger cabin.

According to a further embodiment, when the track assembly adjusts the seat support structure in the longitudinal direction from the second horizontal position to the first horizontal position, at least the backrest is pushed in an upward direction along the slide assembly. For example, the backrest is inclined with respect to the seat pan while moving from the first vertical position to the second vertical position.

Further, when the track assembly adjusts the seat support structure in the longitudinal direction from the second horizontal position to the first horizontal position, at least a rear of the seat pan is moved in a vertical direction.

For example, the track assembly is arranged underneath the seat support structure and the slide assembly is arranged behind the seat support structure. For example, the track assembly and the slide assembly are arranged in an angled manner with respect to each other. For example, the slide assembly is arranged rearward of the track assembly and angled about more than 89°, for example 90°, in particular between 91° to 100°, with respect to the track assembly. The track assembly is, for example, mounted to a vehicle floor. The track assembly is arranged substantially parallel to the vehicle floor.

The track assembly comprises a fixed track which is fixed to a vehicle floor and a movable track which is slidable mounted to the fixed track. Moreover, the track assembly can comprise two pairs of tracks, each pair comprising a fixed track and a movable track. The pairs can be arranged parallel to each other underneath the seat support structure. Further, the track assembly comprises at least a drive unit configured to adjust the movable track relative to the fixed track of the track assembly. In particular, the drive unit is configured to drive the movable track, wherein dependent on the longitudinal adjustment of the movable track the seat support structure is adjustable between different positions. For instance, the track assembly uses linear power tracks that travel from 0 - 200 mm from the first horizontal position to the second horizontal position of the seat support structure. The track assembly, in particular the drive unit, is the main driver for the seat support structure. The track assembly, the seat pan and the backrest are attached to each other through a series of linkage elements and pivots in an area of a lower region of the backrest and a rear region of the seat pan. That means that one operation drives multiple linkages.

The slide assembly is, for example, arranged on a fixed structure. The fixed structure is one of a vehicle structure. Alternatively, the slide assembly is fixed to a rear structure of the vehicle seat, such as a rear partition wall arranged in a rear of the seat. The slide assembly comprises a fixed slide which is fixed to the fixed structure and a movable slide which is slidable mounted to the fixed slide. For instance, the slide assembly is configured such that the backrest is allowed to travel 0 - 160 mm downward and upward along the fixed slide from the first vertical position to the second vertical position and vice versa.

According to another embodiment, the slide assembly is arranged at about 90° to 100°, in particular at about 98°, with respect to and substantially rearward from the track assembly.

According to another embodiment, a front region of the seat pan is coupled to a movable track of the track assembly via a seat pan pivot bracket, wherein the front region is pivotable mounted to the seat pan pivot bracket at a seat pan pivot axis.

In a further embodiment, a rear region of the seat pan is coupled to a lower region of the backrest via a mechanical coupling mechanism. This enables a continuous and smooth adjustment of the seat pan and the backrest, wherein a backrest motion is dependent from a corresponding seat pan motion. For example, the mechanical coupling mechanism comprises at least three linkage elements, such as linkage bars, rods or the like. The linkage elements are arranged in such manner that the coupling mechanism provides four pivots, such as pivot points, in the rear region of the seat pan. In particular, the seat pan is coupled to a side element arranged on a lateral side of the backrest. Moreover, the seat pan comprises a seat pan frame and a cushion which is attached to the seat pan frame. A rear portion of the cushion can be linked additionally to the lower region of the backrest such that the cushion is allowed to travel with the backrest by suspending the cushion at the rear of the seat thus maintaining optimal positioning of lumbar and bolster of the backrest to an occupant. For example, the coupling mechanism comprises a number of linkage elements each coupled to at least one of the track assembly, the slide assembly, the backrest and the seat pan. Moreover, at least one of the linkage elements relatively coupled the backrest and the seat pan to the track assembly. At least one of the linkage elements is a pivot bracket which is mounted to the track assembly. This linkage element provides a pivot axis, in particular a joint pivot axis, about which the backrest and the seat pan are pivotable. For example, the linkage element which is coupling the backrest and the seat pan to the track assembly is hinged to the linkage element configured as pivot bracket.

In another further embodiment, when the track adjusts the seat support structure in the longitudinal direction between the first horizontal position and the second horizontal position, the rear of the seat pan is moved in the vertical direction due to a vertical movement of the backrest, wherein the front of the seat pan is pivoted about the seat pan pivot axis. That means that the front region of the seat pan is attached via a free pivot to the movable track allowing the rear region of the seat pan to travel with the backrest in the vertical direction for an increased comfort feeling for an occupant while adjustment of the seat support structure. The backrest is always in contact with a back of an occupant while operating the adjustment.

According to an embodiment, the mechanical coupling mechanism is configured to link the backrest and a movable track of the track assembly such that when the movable track is adjusted relative to a fixed track of the track assembly, the backrest is moved with the movable track in the longitudinal direction. Further, the mechanical coupling mechanism comprises a number of linkage elements which link the backrest with the seat pan and the track assembly.

According to a further embodiment, an upper region of the backrest is mounted to a movable slide of the slide assembly via a backrest pivot bracket, wherein the upper region of the backrest is pivotable mounted to the backrest pivot bracket at an upper pivot axis. The backrest is attached to the slide assembly through a free pivot. This allows the backrest pivot and to incline as the seat support structure travels forward and partially lower. Thereby, the rear region of the seat pan drops and the front region raises while the backrest is reclined for an increased comfort feeling for an occupant while adjustment of the seat support structure. Furthermore, the adjustment of the seat support structure maintains a foot space to a front seat whilst maximizing a deep reclining in the seat.

### BRIEF DESCRIPTION OF THE DRAWINGS

The present disclosure will become more fully understood from the detailed description given herein below and the accompanying drawings which are given by way of illustration only, and thus, are not limitative of the present disclosure, wherein:
- Figures 1A and 1B: show schematically a vehicle seat comprising a seat support structure which is adjustable between an initial upright position and at least a fully inclined position,
- Figures 2A and 2B: show schematically a section of the vehicle seat comprising a seat support structure which is adjustable between an initial upright position and at least a fully inclined position,
- Figure 3: shows schematically an enlarged view of a front portion of the vehicle seat, and
- Figure 4: shows schematically an enlarged view of a rear portion of the vehicle seat.

Corresponding parts are marked with the same reference symbols in all figures.

### DETAILED DESCRIPTION OF PREFERRED EMBODIMENTS

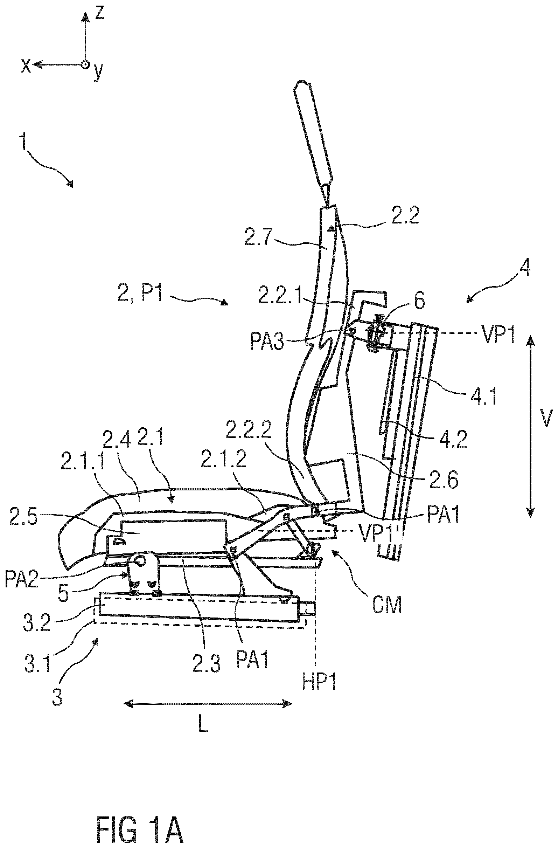

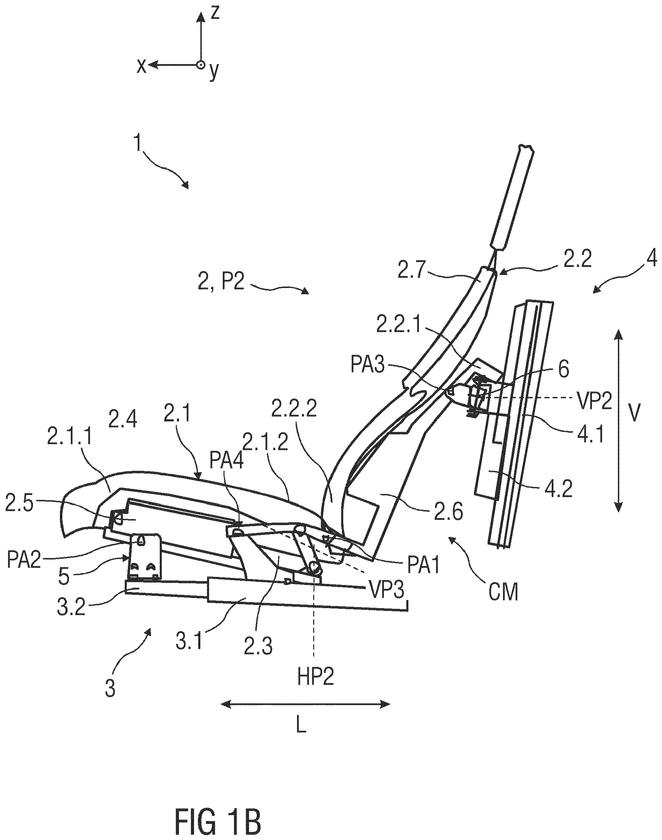

**Figures 1A** **and** **1B** show schematically a vehicle seat 1 comprising a seat support structure 2 which is adjustable between an initial upright position P1 and at least a fully inclined position P2. In particular, figure 1A shows the seat support structure 2 in the initial upright position P1, such as an ingress/egress and sitting position, and figure 1B shows the seat support structure 2 in the fully inclined position P2, such as a deep recline comfort position.

For a better understanding of subsequent descriptions of the vehicle seat 1 a coordinate system is shown in further figures. The coordinate system comprises a longitudinal axis x, a transverse axis y and a vertical axis z in relation to the vehicle seat 1.

The vehicle seat 1 further comprises a track assembly 3 configured to adjust the seat support structure 2 in a longitudinal direction L. Further, the vehicle seat 1 comprises a slide assembly 4 configured to adjust the seat support structure 2 in a substantially vertical direction V. The seat support structure 2 comprises a seat pan 2.1 which is mounted to the track assembly 3, and a backrest 2.2 which is relatively pivotable mounted to the seat pan 2.1 at a backrest pivot axis PA1 and which is coupled to the slide assembly 4. During a longitudinal adjustment of the seat support structure 2 between a first horizontal position HP1 and a second horizontal position HP2, at least the backrest 2.2 is moved in the vertical direction V between a first vertical position VP1 and a second vertical position VP2. In other words: The movement, in particular a vertical adjustment, of the backrest 2.2 is depending on the longitudinal adjustment of the seat support structure 2. Moreover, a pivot axis PA4 is provided which is arranged offset to the backrest 2.2 in the longitudinal direction L. About the pivot axis PA4, both, the backrest 2.2 and the seat pan 2.1 are together pivotable. Thereby, at least the lumbar position of the occupant is maintained while adjustment of the seat support structure 2.

For example, **figure 1A** shows the vehicle seat 1 in the initial upright position P1, wherein the seat pan 2.1 and the backrest 2.2 are arranged in the first horizontal position HP1 (rearmost position) and the backrest 2.2 is arranged in the first vertical position VP1 (highest position). **Figure 1B** shows the vehicle seat 1 in the fully inclined position P2, wherein the seat pan 2.1 and the backrest 2.2 are arranged in the second horizontal position HP2 (most forward position) and the backrest 2.2 is arranged in the second vertical position VP2 (lowest position). In particular, the seat pan 2.1 and the backrest 2.2 are acting as one unit while adjusting the seat 1 from the initial upright position P1 to the fully inclined position P2 and vice versa. The seat support structure 2 can also take any sub-positions between the initial upright position P1 and the fully inclined position P2. For example, when the seat pan 2.1 and the backrest 2.2 are moved from the first horizontal position HP1 to the second horizontal position HP2 or vice versa, the seat pan 2.1 is also moved from a substantially first vertical position VP1' to a second substantially angled position VP3 or vice versa.

When the track assembly 3 adjusts the seat support structure 2 in the longitudinal direction L from the first horizontal position HP1 to the second horizontal position HP2, at least the backrest 2.2 is pulled in a downward direction along the slide assembly 4 and inclined with respect to the seat pan 2.1. When the track assembly 3 adjusts the seat support structure 2 in the longitudinal direction L from the second horizontal position HP2 to the first horizontal position HP1, at least the backrest 2.2 is pushed in an upward direction along the slide assembly 4 and inclined with respect to the seat pan 2.1.

For example, the track assembly 3 is arranged underneath the seat support structure 2 and the slide assembly 4 is arranged behind the seat support structure 2. In particular, the track assembly 3 is arranged horizontal and the slide assembly 4 is arranged substantially vertical. To provide an optimal incline motion of the backrest 2.2, the slide assembly 4 is arranged at about 90° to 100°, in particular at about 98°, with respect to and substantially rearward the track assembly 3.

The track assembly 3 comprises a fixed track 3.1 which is fixed, for instance, to a vehicle floor. The track assembly 3 comprises a movable track 3.2 which is slidable mounted to the fixed track 3.1. Moreover, the track assembly 3 comprises two pairs of tracks, each pair comprising a fixed track 3.1 and a movable track 3.2. The pairs are arranged parallel to each other underneath the seat support structure 2, wherein only one pair is shown. Further, the track assembly 3 comprises at least a not further shown drive unit 8 configured to adjust the movable track 3.2 relative to the fixed track 3.1. In particular, the drive unit 8 is configured to drive the movable track 3.2, wherein dependent on the longitudinal adjustment of the movable track 3.2 the seat support structure 2 is adjustable between different positions. For instance, the track assembly 3 uses linear power tracks that travel from 0 - 200 mm from the first horizontal position HP1 to the second horizontal position HP2.

The slide assembly 4 is, for example, arranged on a not further shown fixed structure. The fixed structure is one of a vehicle structure or a rear structure of the vehicle seat 1, such as a rear partition wall arranged in a rear of the seat 1. The slide assembly 4 comprises a fixed slide 4.1 and a movable slide 4.2 which is slidable mounted to the fixed slide 4.1. For instance, the slide assembly 4 is configured such that the backrest 2.2 is allowed to travel 0 - 160 mm downward and upward along the fixed slide 4.1 from the first vertical position VP1 to the second vertical position VP2 and vice versa.

The seat pan 2.1 comprises a seat pan frame 2.3 and a cushion 2.4 which is arranged on the seat pan frame 2.3. Further, the seat pan 2.1 comprises a cushion attachment element 2.5 to attach the cushion 2.4 at a predefined distance to the seat pan frame 2.3. The seat pan 2.1 comprises a front region 2.1.1 which is coupled to the movable track 3.2 via a seat pan pivot bracket 5, wherein the front region 2.1.1 is pivotable mounted to the seat pan pivot bracket 5 at a seat pan pivot axis PA2. In particular, the seat pan frame 2.3 is attached to the movable track 3.2 via the seat pan pivot bracket 5. For example, in the angled position VP3 of the seat pan 2.1, the rear region 2.1.2 is lowered towards the track assembly 3 and the front region 2.1.1 is substantially pivoted upwards substantially away from the track assembly 3. A connection point of the seat pan 2.1 and the backrest 2.2 is positioned in the deep recline position in which the connection point is closer to the track assembly 3 and so as to a vehicle floor.

The backrest 2.2 comprises a backrest frame 2.6 and a cushion 2.7 which is arranged on the backrest frame 2.6. The backrest frame 2.6 is coupled to the slide assembly 4. In particular, an upper region 2.2.1 of the backrest frame 2.6 is mounted to the movable slide 4.2 via a backrest pivot bracket 6, wherein the upper region 2.2.1 is pivotable mounted to the backrest pivot bracket 6 at an upper pivot axis PA3. In particular, the backrest frame 2.6 is attached to the movable slide 4.2 through a free pivot provided on the backrest pivot bracket 6. This allows the backrest 2.2 to pivot and to incline as the seat support structure 2 travels forward and partially lower.

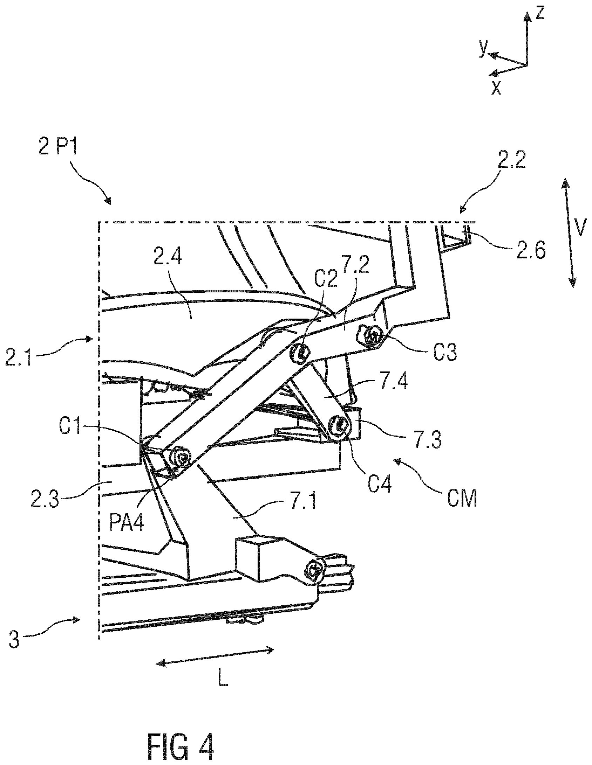

Further, the seat pan 2.1 comprises a rear region 2.1.2 which is coupled to a lower region 2.2.2 of the backrest 2.2 via a mechanical coupling mechanism CM. For example, figure 4 shows a detailed view of the mechanical coupling mechanism CM which comprises a number of linkage elements 7.1 to 7.4, such as linkage bars, rods, brackets or the like. In particular, the linkage elements 7.1 to 7.4 are hinge/pivot links. The linkage elements 7.1 to 7.4 are arranged in such manner that the coupling mechanism CM provides four pivots C1 to C4, such as pivot points, in the rear region 2.1.2 of the seat pan 2.1. In particular, the rear region 2.1.2 of the seat pan 2.1 is coupled to a lateral frame of the backrest frame 2.6. One of the linkage elements 7.1 is configured to couple the backrest frame 2.6 to the movable track 3.2 at a pivot C1. The linkage element 7.1 is coupled to second linkage element 7.2 which extends over the rear region 2.1.2 of the seat pan 2.1 and which is coupled to the side frame element of the backrest frame 2.6. The second linkage element 7.2 provides two pivots C2 and C3, wherein one of the pivots C3 corresponds with the backrest pivot axis PA1. The rear region 2.1.2 of the seat pan frame 2.3 comprises a third linkage element 7.3 which is configured as a pivot bracket providing a pivot C4. A fourth linkage element 7.4 is arranged between the second linkage element 7.2 and the third linkage element 7.3 coupling the pivots C2 and C4. The mechanical coupling mechanism CM is configured to link the backrest 2.2 and the movable track 3.2 such that when the movable track 3.2 is adjusted relative to the fixed track 3.1, the backrest 2.2 is moved with the movable track 3.2 in the longitudinal direction L between the first and second horizontal positions HP1, HP2.

When the track assembly 3 adjusts the seat support structure 2 in the longitudinal direction L between the first horizontal position HP1 and the second horizontal position HP2, the mechanical coupling mechanism CM moves the rear of the seat pan 2.1 in the vertical direction V due to a vertical movement of the backrest 2.2, wherein the front of the seat pan 2.1 is pivoted about the seat pan pivot axis PA2. The mechanical coupling mechanism CM is configured to allow the rear region 2.1.2 of the seat pan 2.1 to travel with the backrest 2.2 in the vertical direction V in unison.

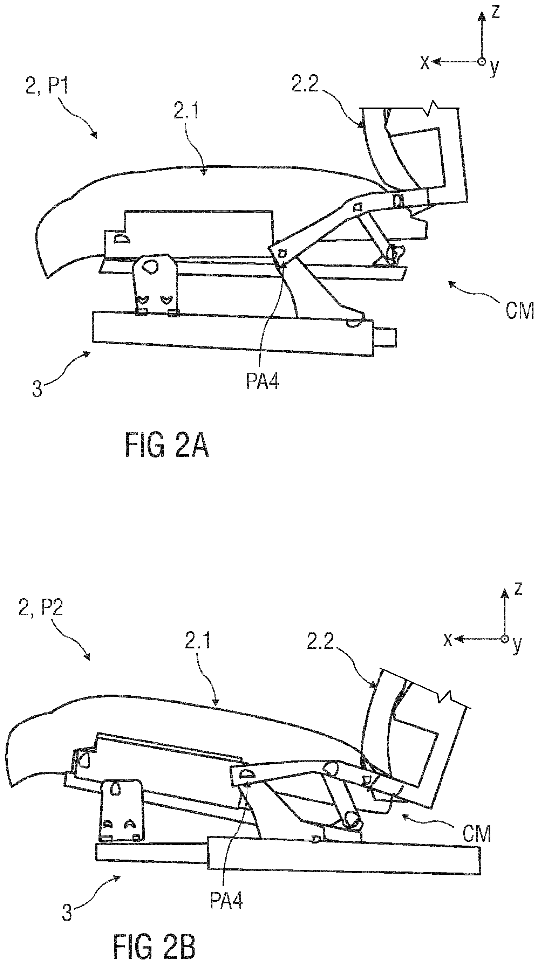

**Figures 2A and 2B** show schematically a section of the vehicle seat 1 comprising a seat support structure 2 which is adjustable between an initial upright position P1 and at least a fully inclined position P2.

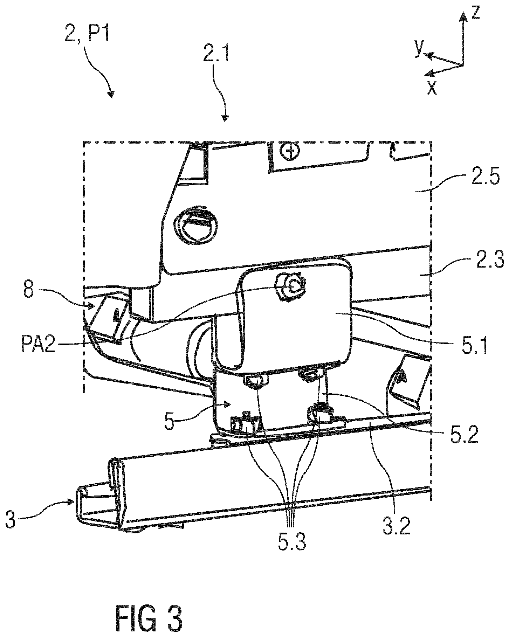

**Figure 3** shows schematically an enlarged view of a front portion of the vehicle seat 1. In particular, figure 3 shows a detailed view of the seat pan pivot bracket 5. The seat pan pivot bracket 5 comprises an upper bracket member 5.1. Further, the seat pan pivot bracket 5 comprises a lower bracket member 5.2. The upper bracket member 5.1 is connected to the front region 2.1.1 of the seat pan frame 2.3. The upper bracket member 5.1 is substantially U-shaped to provide pivot space for the seat pan frame 2.3. The seat pan frame 2.3 is arranged between and hinged to both extending legs of the U-shaped bracket member 5.1. The lower bracket member 5.2 supports the upper bracket member 5.1 on the movable track 3.2. For example, the lower bracket member 5.2 is substantially L-shaped, C-shaped or U-shaped. The bracket members 5.1, 5.2 are fixedly coupled to each other via a number of fastener elements 5.3 such as screws or the like. The lower bracket member 5.2 is fixedly mounted on the movable track 3.2 via fastener elements 5.3 such as screws and/or welding points or the like. It is also possible to provide a U-shaped seat pan pivot bracket 5, wherein the seat pan frame 2.3 is arranged at an open side of the U-shaped bracket between two legs, wherein the seat pan frame 2.3 is hinged to both of the legs and the closed end of the U-shaped bracket is mounted to the movable track 3.2.

**Figure 4** shows schematically an enlarged view of a rear portion of the vehicle seat 1. In particular, figure 4 shows a detailed view of the coupling mechanism CM. The seat pan 2.1 comprises a rear region 2.1.2 which is coupled to a lower region 2.2.2 of the backrest 2.2 via a mechanical coupling mechanism CM. For example, figure 4 shows a detailed view of the mechanical coupling mechanism CM which comprises a number of linkage elements 7.1 to 7.4, such as linkage bars, rods, brackets or the like. In particular, the linkage elements 7.1 to 7.4 are hinge/pivot links. The linkage elements 7.1 to 7.4 are arranged in such manner that the coupling mechanism CM provides four pivots C1 to C4, such as pivot points, in the rear region 2.1.2 of the seat pan 2.1. In particular, the rear region 2.1.2 of the seat pan 2.1 is coupled to a lateral frame of the backrest frame 2.6. One of the linkage elements 7.1 is configured to couple the backrest frame 2.6 to the movable track 3.2 at a pivot C1. The pivot C1 refers to the pivot axis PA4 about which the backrest 2.2 is pivotable. Pivoting of the backrest 2.2 about said pivot axis PA4 initiates pivot movement of the rear region 2.1.2 of the seat pan 2.1 via the mechanical coupling mechanism CM. The pivot axis PA4 is arranged substantially forward of the backrest 2.2 and substantially at a fixed height with respect to the seat pan frame 2.3. The linkage element 7.1 is coupled to second linkage element 7.2 which extends over the rear region 2.1.2 of the seat pan 2.1 and which is coupled to the side frame element of the backrest frame 2.6. The second linkage element 7.2 provides two pivots C2 and C3, wherein one of the pivots C3 corresponds with the backrest pivot axis PA1. The rear region 2.1.2 of the seat pan frame 2.3 comprises a third linkage element 7.3 which is configured as a pivot bracket providing a pivot C4. This bracket linkage element 7.3 is fixed in its position on the seat pan frame 2.3. A fourth linkage element 7.4 is arranged between the second linkage element 7.2 and the third linkage element 7.3 coupling the pivots C2 and C4. The mechanical coupling mechanism CM is configured to link the backrest 2.2 and the movable track 3.2 such that when the movable track 3.2 is adjusted relative to the fixed track 3.1, the backrest 2.2 is moved with the movable track 3.2 in the longitudinal direction L between the first and second horizontal position HP1, HP2.

The linkage elements 7.1 to 7.4 are rigid links. For example, the main adjustment link is the linkage element 7.2. The linkage element 7.2 couples the backrest frame 2.6 and the seat pan frame 2.3 to the track assembly 3 via the linkage element 7.1 which is configured as a bracket. The linkage element 7.2 is hinged to the bracket linkage element 7.1 at the pivot C1, wherein movement of the linkage element 7.2 about the pivot C1 initiates movement of the further linkage element 7.4 with respect to the bracket linkage element 7.3 so that the seat pan frame 2.3 and the backrest frame 2.6 move as a unit in a vertical and horizontal direction. Moving of the backrest frame 2.6 in the vertical direction V initiates a pushing or pulling force to the seat pan frame 2.3 or vice versa.

### List of References

- 1: seat
- 2: seat support structure
- 2.1: seat pan
- 2.1.1: front region
- 2.1.2: rear region
- 2.2: backrest
- 2.2.1: upper region
- 2.2.2: lower region
- 2.3: seat pan frame
- 2.4: cushion
- 2.5: cushion attachment element
- 2.6: backrest frame
- 2.7: cushion
- 3: track assembly
- 3.1: fixed track
- 3.2: movable track
- 4: slide assembly
- 4.1: fixed slide
- 4.2: movable slide
- 5: seat pan pivot bracket
- 5.1, 5.2: bracket member
- 5.3: fastener element
- 6: backrest pivot bracket
- 7.1 to 7.4: linkage element
- 8: drive unit

- C1 to C4: pivots
- CM: coupling mechanism
- HP1, HP2: horizontal position
- L: longitudinal direction
- PA1: backrest pivot axis
- PA2: seat pan pivot axis
- PA3: upper pivot axis
- PA4: pivot axis
- P1: initial upright position
- P2: fully inclined position
- V: vertical direction
- VP1, VP1', VP2: vertical position
- VP3: angled position
- x: longitudinal axis
- y: transverse axis
- z: vertical axis

## Claims

1. Vehicle seat (1) comprising at least:
- a seat support structure (2) which is adjustable between an initial upright position (P1) and at least a fully inclined position (P2),
- a track assembly (3) configured to adjust the seat support structure (2) in a longitudinal direction (L), and
- a slide assembly (4) configured to adjust the seat support structure (2) in a substantially vertical direction (V),
wherein the seat support structure (2) comprises at least
- a seat pan (2.1) which is mounted to the track assembly (3), and
- a backrest (2.2) which is mounted to the seat pan (2.1) and which is coupled to the slide assembly (4),
wherein during a longitudinal adjustment of the seat support structure (2) between a first horizontal position (HP1) and a second horizontal position (HP2), at least the backrest (2.2) is moved in the vertical direction (V) between a first vertical position (VP1) and a second vertical position (VP2), and
wherein the backrest (2.2) is attached to the slide assembly (4) through a free pivot such that the backrest (2.2) pivots and inclines as the seat support structure (2) travels forward and partially lower, thereby a rear region (2.1.2) of the seat pan (2.1) drops and a front region (2.1.1) of the seat pan (2.1) raises while the backrest (2.2) is reclined.

2. Vehicle seat (1) according to claim 1, wherein when the track assembly (3) adjusts the seat support structure (2) in the longitudinal direction (L) from the first horizontal position (HP1) to the second horizontal position (HP2), at least the backrest (2.2) is pulled in a downward direction along the slide assembly (4).

3. Vehicle seat (1) according to claim 1 or 2, wherein when the track assembly (3) adjusts the seat support structure (2) in the longitudinal direction (L) from the second horizontal position (HP2) to the first horizontal position (HP1), at least the backrest (2.2) is pushed in an upward direction along the slide assembly (4).

4. Vehicle seat (1) according to any one of the preceding claims, wherein the track assembly (3) and the slide assembly (4) are arranged in an angled manner with respect to each other.

5. Vehicle seat (1) according to any one of the preceding claims, wherein the slide assembly (4) is arranged rearward of the track assembly (3) and angled about more than 89° with respect to the track assembly (3).

6. Vehicle seat (1) according to any one of the preceding claims, wherein the front region (2.1.1) of the seat pan (2.1) is coupled to a movable track (3.2) of the track assembly (3) via a seat pan pivot bracket (5), wherein the front region (2.1.1) is pivotable mounted to the seat pan pivot bracket (5) at a seat pan pivot axis (PA2).

7. Vehicle seat (1) according to any one of the preceding claims, wherein the rear region (2.1.2) of the seat pan (2.1) is coupled to a lower region (2.2.2) of the backrest (2.2) via a mechanical coupling mechanism (CM).

8. Vehicle seat (1) according to claim 7, wherein the mechanical coupling mechanism (CM) comprises a number of linkage elements (7.1 to 7.4) each coupled to at least one of the track assembly (3), the slide assembly (4), the backrest (2.2) and the seat pan (2.1).

9. Vehicle seat (1) according to claim 7 or 8, wherein at least one linkage element (7.2) of the mechanical coupling mechanism (CM) relatively couples the backrest (2.2) and the seat pan (2.1) to the track assembly (3).

10. Vehicle seat (1) according to any claim 7 to 9, wherein at least one linkage element (7.1) of the mechanical coupling mechanism (CM) is a pivot bracket which is mounted to the track assembly (3) and which provides a pivot axis (PA4) about which the backrest (2.2) and the seat pan (2.1) are pivotable.

11. Vehicle seat (1) according to any one of the preceding claims, wherein when the track assembly (3) adjusts the seat support structure (2) in the longitudinal direction (L) between the first horizontal position (HP1) and the second horizontal position (HP2), the rear region (2.1.2) of the seat pan (2.1) is moved in the vertical direction (V) with a vertical movement of the backrest (2.2), wherein the front region (2.1.1) of the seat pan (2.1) is pivoted about the seat pan pivot axis (PA2).

12. Vehicle seat (1) according to any one of the preceding claims, wherein the backrest (2.2) and a movable track (3.2) of the track assembly (3) are coupled to each other, wherein when the movable track (3.2) is adjusted relative to a fixed track (3.1) of the track assembly (3), the backrest (2.2) is moved with the movable track (3.2) at least in the longitudinal direction (L).

13. Vehicle seat (1) according to any one of the preceding claims, wherein an upper region (2.2.1) of the backrest (2.2) is mounted to a movable slide (4.2) of the slide assembly (4) via a backrest pivot bracket (6), wherein the upper region (2.2.1) of the backrest (2.2) is pivotable mounted to the backrest pivot bracket (6) at an upper pivot axis (PA3).

14. Vehicle seat (1) according to any one of the preceding claims, wherein the track assembly (3) is arranged underneath the seat support structure (2) and the slide assembly (4) is arranged behind the seat support structure (2).

15. Vehicle seat (1) according any one of the preceding claims, wherein the track assembly (3) comprises at least a drive unit (8) configured to adjust a movable track (3.2) relative to a fixed track (3.1) of the track assembly (3).

## Patentansprüche

1. Fahrzeugsitz (1), der mindestens Folgendes umfasst:
- eine Sitztragstruktur (2), die zwischen einer anfänglichen aufrechten Position (P1) und mindestens einer vollständig geneigten Position (P2) verstellbar ist,
- eine Schienenanordnung (3), die dazu ausgelegt ist, die Sitztragstruktur (2) in einer Längsrichtung (L) zu verstellen, und
- eine Gleitanordnung (4), die dazu ausgelegt ist, die Sitztragstruktur (2) in einer im Wesentlichen vertikalen Richtung (V) zu verstellen,
wobei die Sitztragstruktur (2) mindestens Folgendes umfasst
- eine Sitzschale (2.1), die an der Schienenanordnung (3) montiert ist, und
- eine Rückenlehne (2.2), die an der Sitzschale (2.1) montiert und die mit der Gleitanordnung (4) gekoppelt ist,
wobei während einer Längsverstellung der Sitztragstruktur (2) zwischen einer ersten horizontalen Position (HP1) und einer zweiten horizontalen Position (HP2) mindestens die Rückenlehne (2.2) in der vertikalen Richtung (V) zwischen einer ersten vertikalen Position (VP1) und einer zweiten vertikalen Position (VP2) bewegt wird, und
wobei die Rückenlehne (2.2) an der Gleitanordnung (4) durch einen freien Schwenkpunkt derart angebracht ist, dass die Rückenlehne (2.2) schwenkt und sich neigt, während die Sitztragstruktur (2) nach vorn und teilweise nach unten verfährt, wodurch ein hinterer Bereich (2.1.2) der Sitzschale (2.1) absinkt und ein vorderer Bereich (2.1.1) der Sitzschale (2.1) sich hebt, während die Rückenlehne (2.2) zurückgelehnt wird.

2. Fahrzeugsitz (1) nach Anspruch 1, wobei, wenn die Schienenanordnung (3) die Sitztragstruktur (2) in der Längsrichtung (L) von der ersten horizontalen Position (HP1) zu der zweiten horizontalen Position (HP2) verstellt, mindestens die Rückenlehne (2.2) in eine Richtung nach unten entlang der Gleitanordnung (4) gezogen wird.

3. Fahrzeugsitz (1) nach Anspruch 1 oder 2, wobei, wenn die Schienenanordnung (3) die Sitztragstruktur (2) in der Längsrichtung (L) von der zweiten horizontalen Position (HP2) zu der ersten horizontalen Position (HP1) verstellt, mindestens die Rückenlehne (2.2) in eine Richtung nach oben entlang der Gleitanordnung (4) geschoben wird.

4. Fahrzeugsitz (1) nach einem der vorhergehenden Ansprüche, wobei die Schienenanordnung (3) und die Gleitanordnung (4) in einer in Bezug zueinander abgewinkelten Weise angeordnet sind.

5. Fahrzeugsitz (1) nach einem der vorhergehenden Ansprüche, wobei die Gleitanordnung (4) hinter der Schienenanordnung (3) angeordnet und um mehr als 89° in Bezug auf die Schienenanordnung (3) abgewinkelt ist.

6. Fahrzeugsitz (1) nach einem der vorhergehenden Ansprüche, wobei der vordere Bereich (2.1.1) der Sitzschale (2.1) mit einer beweglichen Schiene (3.2) der Schienenanordnung (3) über eine Sitzschalenschwenkhalterung (5) gekoppelt ist, wobei der vordere Bereich (2.1.1) auf einer Sitzschalenschwenkachse (PA2) schwenkbar an der Sitzschalenschwenkhalterung (5) montiert ist.

7. Fahrzeugsitz (1) nach einem der vorhergehenden Ansprüche, wobei der hintere Bereich (2.1.2) der Sitzschale (2.1) mit einem unteren Bereich (2.2.2) der Rückenlehne (2.2) über einen mechanischen Kopplungsmechanismus (CM) gekoppelt ist.

8. Fahrzeugsitz (1) nach Anspruch 7, wobei der mechanische Kopplungsmechanismus (CM) eine Anzahl von Verbindungselementen (7.1 bis 7.4) umfasst, die jeweils mit mindestens einer der Schienenanordnung (3), der Gleitanordnung (4), der Rückenlehne (2.2) und der Sitzschale (2.1) gekoppelt sind.

9. Fahrzeugsitz (1) nach Anspruch 7 oder 8, wobei mindestens ein Verbindungselement (7.2) des mechanischen Kopplungsmechanismus (CM) die Rückenlehne (2.2) und die Sitzschale (2.1) mit der Schienenanordnung (3) relativ koppelt.

10. Fahrzeugsitz (1) nach einem der Ansprüche 7 bis 9, wobei mindestens ein Verbindungselement (7.1) des mechanischen Kopplungsmechanismus (CM) eine Schwenkhalterung ist, die an der Schienenanordnung (3) montiert ist und die eine Schwenkachse (PA4) bereitstellt, um die die Rückenlehne (2.2) und die Sitzschale (2.1) schwenkbar sind.

11. Fahrzeugsitz (1) nach einem der vorhergehenden Ansprüche, wobei, wenn die Schienenanordnung (3) die Sitztragstruktur (2) in der Längsrichtung (L) zwischen der ersten horizontalen Position (HP1) und der zweiten horizontalen Position (HP2) verstellt, der hintere Bereich (2.1.2) der Sitzschale (2.1) in der vertikalen Richtung (V) mit einer vertikalen Bewegung der Rückenlehne (2.2) bewegt wird, wobei der vordere Bereich (2.1.1) der Sitzschale (2.1) um die Sitzschalenschwenkachse (PA2) geschwenkt wird.

12. Fahrzeugsitz (1) nach einem der vorhergehenden Ansprüche, wobei die Rückenlehne (2.2) und eine bewegliche Schiene (3.2) der Schienenanordnung (3) miteinander gekoppelt sind, wobei, wenn die bewegliche Schiene (3.2) relativ zu einer feststehenden Schiene (3.1) der Schienenanordnung (3) verstellt wird, die Rückenlehne (2.2) mit der beweglichen Schiene (3.2) mindestens in der Längsrichtung (L) bewegt wird.

13. Fahrzeugsitz (1) nach einem der vorhergehenden Ansprüche, wobei ein oberer Bereich (2.2.1) der Rückenlehne (2.2) an einem beweglichen Gleitelement (4.2) der Gleitanordnung (4) über eine Rückenlehnenschwenkhalterung (6) montiert ist, wobei der obere Bereich (2.2.1) der Rückenlehne (2.2) auf einer oberen Schwenkachse (PA3) schwenkbar an der Rückenlehnenschwenkhalterung (6) montiert ist.

14. Fahrzeugsitz (1) nach einem der vorhergehenden Ansprüche, wobei die Schienenanordnung (3) unterhalb der Sitztragstruktur (2) angeordnet ist und die Gleitanordnung (4) hinter der Sitztragstruktur (2) angeordnet ist.

15. Fahrzeugsitz (1) nach einem der vorhergehenden Ansprüche, wobei die Schienenanordnung (3) mindestens eine Antriebseinheit (8) umfasst, die dazu ausgelegt ist, eine bewegliche Schiene (3.2) relativ zu einer feststehenden Schiene (3.1) der Schienenanordnung (3) zu verstellen.

## Revendications

1. Siège de véhicule (1) comprenant au moins :
une structure de support de siège (2) qui est ajustable entre une position verticale initiale (P1) et au moins une position complètement inclinée (P2),
un ensemble formant rail (3) conçu pour ajuster la structure de support de siège (2) dans une direction longitudinale (L), et
un ensemble formant glissière (4) conçu pour ajuster la structure de support de siège (2) dans une direction sensiblement verticale (V),
la structure de support de siège (2) comprenant au moins
un plateau de siège (2.1) qui est monté sur l'ensemble formant rail (3), et
un dossier (2.2) qui est monté sur le plateau de siège (2.1) et qui est accouplé à l'ensemble formant glissière (4),
au cours d'un ajustement longitudinal de la structure de support de siège (2) entre une première position horizontale (HP1) et une seconde position horizontale (HP2), au moins le dossier (2.2) étant déplacé dans la direction verticale (V) entre une première position verticale (VP1) et une seconde position verticale (VP2), et
le dossier (2.2) étant fixé à l'ensemble formant glissière (4) par un pivot libre de sorte que le dossier (2.2) pivote et s'incline lorsque la structure de support de siège (2) se déplace vers l'avant et partiellement plus bas, moyennant quoi une région arrière (2.1.2) du plateau de siège (2.1) s'abaisse et une région avant (2.1.1) du plateau de siège (2.1) s'élève tandis que le dossier (2.2) s'incline.

2. Siège de véhicule (1) selon la revendication 1, lorsque l'ensemble formant rail (3) ajuste la structure de support de siège (2) dans la direction longitudinale (L) de la première position horizontale (HP1) à la seconde position horizontale (HP2), au moins le dossier (2.2) étant tiré vers le bas le long de l'ensemble formant glissière (4).

3. Siège de véhicule (1) selon la revendication 1 ou 2, lorsque l'ensemble formant rail (3) ajuste la structure de support de siège (2) dans la direction longitudinale (L) de la seconde position horizontale (HP2) à la première position horizontale (HP1), au moins le dossier (2.2) étant poussé vers le haut le long de l'ensemble formant glissière (4).

4. Siège de véhicule (1) selon l'une quelconque des revendications précédentes, l'ensemble formant rail (3) et l'ensemble formant glissière (4) étant disposés en angle l'un par rapport à l'autre.

5. Siège de véhicule (1) selon l'une quelconque des revendications précédentes, l'ensemble formant glissière (4) étant disposé à l'arrière de l'ensemble formant rail (3) et incliné de plus de 89° par rapport à l'ensemble formant rail (3).

6. Siège de véhicule (1) selon l'une quelconque des revendications précédentes, la région avant (2.1.1) du plateau de siège (2.1) étant accouplée à un rail mobile (3.2) de l'ensemble formant rail (3) par l'intermédiaire d'un support de pivot de plateau de siège (5), la région avant (2.1.1) étant montée pivotante sur le support de pivot de plateau de siège (5) au niveau d'un axe de pivotement de plateau de siège (PA2).

7. Siège de véhicule (1) selon l'une quelconque des revendications précédentes, la région arrière (2.1.2) du plateau de siège (2.1) étant accouplée à une région inférieure (2.2.2) du dossier (2.2) par l'intermédiaire d'un mécanisme d'accouplement mécanique (CM).

8. Siège de véhicule (1) selon la revendication 7, le mécanisme d'accouplement mécanique (CM) comprenant un certain nombre d'éléments de liaison (7.1 à 7.4) accouplés chacun à au moins l'un parmi l'ensemble formant rail (3), l'ensemble formant glissière (4), le dossier (2.2) et le plateau de siège (2.1).

9. Siège de véhicule (1) selon la revendication 7 ou 8, au moins un élément de liaison (7.2) du mécanisme d'accouplement mécanique (CM) accouplant le dossier (2.2) et le plateau de siège (2.1) par rapport à l'ensemble formant rail (3).

10. Siège de véhicule (1) selon l'une quelconque des revendications 7 à 9, au moins un élément de liaison (7.1) du mécanisme d'accouplement mécanique (CM) étant un support de pivot qui est monté sur l'ensemble formant rail (3) et qui fournit un axe de pivotement (PA4) autour duquel le dossier (2.2) et le plateau de siège (2.1) peuvent pivoter.

11. Siège de véhicule (1) selon l'une quelconque des revendications précédentes, lorsque l'ensemble formant rail (3) ajuste la structure de support de siège (2) dans la direction longitudinale (L) entre la première position horizontale (HP1) et la seconde position horizontale (HP2), la région arrière (2.1.2) du plateau de siège (2.1) étant déplacée dans la direction verticale (V) avec un mouvement vertical du dossier (2.2), la région avant (2.1.1) du plateau de siège (2.1) pivotant autour de l'axe de pivotement de plateau de siège (PA2).

12. Siège de véhicule (1) selon l'une quelconque des revendications précédentes, le dossier (2.2) et un rail mobile (3.2) de l'ensemble formant rail (3) étant accouplés l'un à l'autre, lorsque le rail mobile (3.2) est ajusté par rapport à un rail fixe (3.1) de l'ensemble formant rail (3), le dossier (2.2) étant déplacé avec le rail mobile (3.2) au moins dans la direction longitudinale (L).

13. Siège de véhicule (1) selon l'une quelconque des revendications précédentes, une région supérieure (2.2.1) du dossier (2.2) étant montée sur une glissière mobile (4.2) de l'ensemble formant glissière (4) par l'intermédiaire d'un support de pivotement de dossier (6), la région supérieure (2.2.1) du dossier (2.2) étant montée pivotante sur le support de pivotement de dossier (6) au niveau d'un axe de pivotement supérieur (PA3).

14. Siège de véhicule (1) selon l'une quelconque des revendications précédentes, l'ensemble formant rail (3) étant disposé sous la structure de support de siège (2) et l'ensemble formant glissière (4) étant disposé derrière la structure de support de siège (2)

15. Siège de véhicule (1) selon l'une quelconque des revendications précédentes, l'ensemble formant rail (3) comprenant au moins une unité d'entraînement (8) conçue pour ajuster un rail mobile (3.2) par rapport à un rail fixe (3.1) de l'ensemble formant rail (3).
